# EUROPÄISCHE PATENTSCHRIFT

(11) **EP 3 245 048 B1**
(45) Veröffentlichungstag und Bekanntmachung des Hinweises auf die Patenterteilung: **12.12.2018**
(21) Anmeldenummer: 16700065.2
(22) Anmeldetag: 06.01.2016
(51) Int. Cl.: B29C 70/48, B29B 11/16, B29C 70/30, B29C 70/12, B29K 307/04, B29K 309/08, B29K 105/12

(54) **3-DIMENSIONALES HOCHFESTES FASERVERBUNDBAUTEIL UND VERFAHREN ZU SEINER HERSTELLUNG**
3-DIMENSIONAL HIGH-STRENGTH FIBER COMPOSITE COMPONENT AND METHOD FOR PRODUCING SAME
COMPOSANT COMPOSITE RENFORCÉ DE FIBRES TRIDIMENSIONNEL HAUTE RÉSISTANCE ET PROCÉDÉ DE FABRICATION DUDIT COMPOSANT

(30) Priorität: 12.01.2015 DE 102015200275
(43) Veröffentlichungstag der Anmeldung: 22.11.2017
(73) Patentinhaber: Adler Pelzer Holding GmbH, 58454 Witten (DE)
(72) Erfinder: NICOLAI, Norbert, 46514 Schermbeck-Gahlen (DE); PIATKOWSKI, Reimund, 44143 Dortmund (DE); MONDINO, Lino, 12080 (Cuneo) Pianfei (IT); GRIMM, Heinrich, 31162 Bad Salzdetfurth (DE); SCHULZE, Volkmar, 84069 Schierling (DE)
(74) Vertreter: dompatent von Kreisler Selting Werner - Partnerschaft von Patent- und Rechtsanwälten mbB
(86) Internationale Anmeldenummer: PCT/EP2016/050126
(87) Internationale Veröffentlichungsnummer: WO 2016/113159

(56) Entgegenhaltungen:
- US-A- 5 192 387
- US-A- 5 229 052
- US-B1- 6 610 229

## Beschreibung

Die vorliegende Erfindung betrifft ein 3-dimensionales hochfestes Faserverbundbauteil und ein Verfahren zu seiner Herstellung.

Zur Herstellung von Bauteilen aus faserverstärkten Kunststoffen sind verschiedene Verfahren bekannt, die sich in ihren Eigenschaften und der benötigten Technologie zum Teil stark unterscheiden.

Dabei muss immer in Abhängigkeit vom geplanten Einsatz ein Kompromiss zwischen dem gewünschten Leichtbau, den zu erzielenden Eigenschaften und der Wirtschaftlichkeit gefunden werden.

Das ist darin begründet, dass zum einen die eingesetzten hochfesten, hochmoduligen Fasern, beispielsweise die Kohlenstofffasern (C-Fasern) oder Glasfasern (GF-Fasern), sehr kostenintensiv sind; und zum anderen die Verfahren wie Prepregtechnik, Handlaminierverfahren oder die Autoklavenfertigung, durch einen hohen Grad an manueller Fertigung sehr zeitaufwendig und wenig automatisierbar sind; und zu teuren Halbzeugen führen.

Diese Verfahren haben den Nachteil, dass erst textile Flächenstrukturen, Gewebe, Gelege, Geflechte oder Gestricke aufwendig hergestellt und diese dann für das Prepregverfahren mit Harz getränkt werden müssen; geschnitten und gelegt werden. Zum anderen entstehen relativ große Schnittabfälle. Zur Vermeidung von Aushärtungen und Depolymerisationen ist eine aufwendige Lagerung notwendig.

Eine Weiterverarbeitung kann in der Heißpresstechnik oder der Autoklaventechnik geschehen.

Eine andere Lösung zur Herstellung von gerichteten Faserverbundbauteilen stellt die Wickeltechnik dar, bei der ein Dorn umwickelt wird. Ein solches Verfahren ist beispielsweise aus der DE 10 2004 003 749 A1 bekannt. Nachteil der Wickeltechnologie ist die Beschränkung auf Bauteile mit konvexen Oberflächen. In der DE 10 2011 078 709 A1 wird ein Verfahren beschrieben, in welchen nach dem Wickeln die Kernform geändert werden kann.

Für Großserien ist der Konflikt zwischen Leichtbau mit C-Fasern auf der einen Seite und den Kosten für den CFK-Einsatz auf der anderen Seite besonders deutlich. Neben dem Materialpreis sind es vor allem die zeitintensiven Technologien, die eine Serienfertigung erschweren.

Für die Fahrzeugindustrie sind es beispielsweise nach Prof. Ferkel [Prof. Dr. H. Ferkel, CCeV Automotive Forum 2010, 24.06.2010, Faserverbundwerkstoffe als wirtschaftliche Option für die Großserie.] im Wesentlichen die Produktionskosten, die gesenkt werden sollen.

Verfahren mit hoher Faserorientierung, die eine höhere Automatisierung erlauben, sind auf einfache Bauteile beschränkt (Wickel-, Pultrusionsverfahren).

Serientaugliche Verfahren wie Spritzguss, SMC, GMT und LFT nutzen das Potential der Fasern nur bedingt aus.

Die Eigenschaften der Bauteile werden einerseits durch die Art der Fasern, die Faseranordnung, den Faseranteil, die Faserlänge und die Faserorientierung sowie andererseits durch das Matrixmaterial und die Wechselwirkung von Fasern mit Matrixmaterial bestimmt.

Die DE 2 145 442 A und die darauf aufbauende DE 2 300 269 A beschreiben ein vorgeformtes Teil aus Fasermaterial sowie ein Verfahren und eine Vorrichtung zu dessen Herstellung. Insbesondere wird ein vorgeformtes Teil geschafft, das zur Herstellung von faserverstärkten Gegenständen in Mattenform wie beispielsweise Kessel, Tanks oder Ähnliches verwendbar ist; hierbei sollen die Fasern des vorgeformenten Teils gleichmäßig entlang der gesamten Wandfläche verteilt werden. Die Vorrichtung zur Durchführung des Verfahrens weist eine perforierte oder durchlöcherte Form auf, die um ihre Längsachse gedreht wird und an deren inneren Vakuum angelegt wird. Zwei Zerhacker Einrichtungen zerschneiden das Faser verstärkende Material, beispielsweise Glasfasern, in kurze Faserstücke und leiten die Fasern auf die sich drehende Form. Das an die durchlöcherte Form angelegte Vakuum bewirkt, dass die Fasern beliebig ausgerichtet werden sollen. Da die Form sich bezüglich der Schneidwerkzeug dreht, während dieses entlang der Form bewegt wird, um die Fasern auf sie aufzubringen, verläuft die vorherrschende Ausrichtung der Fasern spiralförmig um die perforierte Form herum. Das Verfahren eignet sich somit nicht zur Herstellung geometrischer "dreidimensionaler Gegenstände, da hier ein großer Verschnittanteil entfallen würde. Darüber hinaus eignet sich das Verfahren auch nicht zur Herstellung von Gegenständen mit partiell unterschiedlichen Flächengewichten.

EP 0 587 283 A1 beschreibt einen Faserformling, bei dem ein Bindemittel und Schnittfasern aus entsprechenden Düsen auf ein Sieb geblasen werden. Über eine Vielzahl von weiteren Düsen wird gleichzeitig erwärmte Luft auf den sich bildenden Faserformling geblasen, um das Bindemittel zu erhärten. In der WO 93/20994 A wird ein Verfahren zur Herstellung eines Faserformlings beschrieben, wobei ein Pulver-Bindungsmittel auf Schnittglasfasern beschrieben wird, die sich auf einem Vorformsieb befinden. Das Pulver-Bindemittel und die geschnittenen Glasfasern werden dann erhitzt, um die Partikel des Bindemittels zu erweichen, wodurch diese auf den Glasfasern haften, um den Vorformling zu bilden.

Die WO 2005 030 462 A2 beschreibt eine Vorrichtung und ein Verfahren zur Herstellung von Faserformlingen, bei denen Fasern und Bindemittel heiß auf eine Oberfläche aufgebracht werden sind, wobei die Materialien konditioniert und anschließend auf der Oberfläche, verfestigt werden. Die Rohmaterialien des Faserformlings enthalten Verstärkungsfasern, die mit dem Bindemittel, insbesondere thermoplastischen oder duroplastischen Materialien gemischt werden. Im Anschluss an die Auftragung auf die Oberfläche werden diese weiter erhitzt, abgekühlt und verfestigt. Hierbei bildet sich ein Faserformling in Form einer offenen Matte mit Zwischenräumen zwischen den Verstärkungsfasern. Die abgeschiedene Matte kann weiterhin eine endgültige gewünschte Form vor der vollständigen Erstarrung geformt werden.

Die DE 10 2011 120 986 A1 beschreibt ein Spritzgussverfahren zur Fertigung eines Faserverbundbauteils, bei welchem zunächst ein Kern des Bauteils in einem ersten Werkzeug gegossen wird. Dann wird Fasermaterial mit Kunststoff getränkt und der gegossene Kern mit dem getränkten Fasermaterial umwickelt. Der umwickelte Kern wird anschließend in einem zweiten Spritzgusswerkzeug mit Wärme beaufschlagt, wodurch das Fasermaterial fixiert wird. Das kerngefüllte Hohlprofil wird dann entformt und der Kern durch Erwärmung aus dem Hohlprofil ausgeschmolzen.

Auch die EP 2 543 494 A2 beschreibt ein Verfahren zum Herstellen eines Bauteils aus faserverstärktem Kunststoff. Dabei wird zunächst ein Kern in einer Faseraufbringvorrichtung angeordnet. Dann werden Fasern auf den Kern aufgebracht, welche mit einer Kunststoffmatrix imprägniert sind. Durch Beaufschlagung der Fasern mit Druck und/oder Hitze wird die Kunststoffmatrix in einem Verfahrensschritt ausgehärtet. Gemäß der EP 2 543 494 A2 kann der Kern eine Oberfläche mit einem formvariablen Bereich aufweisen.

Bei der Herstellung derartiger herkömmlicher dreidimensionaler Bauteile kann es vorkommen, dass senkrecht zur Faserrichtung Hohlräume entstehen, bedingt durch ein Auseinanderziehen uniaxialer Fasern senkrecht zur Faserrichtung. Derartige Hohlräume werden dann durch den Kunststoff ausgefüllt. Diese Bereiche haben dann eine deutlich geringere Festigkeit als die verstärkten Bereiche und führen zu schlechteren Materialeigenschaften.

Im Unterschied hierzu ist bekannt, dass Vliese das beste Deformationsverhalten besitzen; d.h. sie lassen sich am besten einer gewünschten Kontur anpassen. Aber auch hier findet bei Vliesen während der Formgebung in den Bereichen mit der größten Deformation die größte Ausdünnung des Materials statt. Das bedeutet, dass Festigkeitseigenschaften des Bauteils auch bei Verwendung von herkömmlich produziertem Vlies durch die Geometrie des Bauteils bestimmt werden.

Außerdem kann es beim Herstellen von Bauteilen aus Vlies mit stärkerer Verformung passieren, dass es beim Schließen des Presswerkzeugs zu Verschiebungen des Vlieses vom Rand in innenliegende Bereiche kommt.

Eine deutliche Verbesserung bieten daher Faserformlinge, bei denen die eingesetzten Fasern direkt in eine 3-dimensionale Form gelegt und erst dann verfestigt werden.

Für Isolationen im Boden- und Stirnwandbereich von Fahrzeugen sind die unterschiedlichsten Faserinjektionsverfahren zur Herstellung von Faservliesteilen bekannt, die viele der genannten Probleme vermeiden.

EP 0 909 619 B1 beschreibt eine Erfindung zum diskontinuierlichen Herstellen von verformten Verbundmaterialien. Hierbei wird ein FaserGemisch auf eine perforierte Trommel mit der Form des Bauteils gesaugt. Durch Abstreifwalzen wird die Dicke des Bauteils festgelegt. In einem anschließenden Schritt wird das Bauteil durch Wärme verfestigt. Problematisch ist in diesem Verfahren die Einstellung unterschiedlicher Flächengewichte zur definierten Einstellung des lokalen Strömungswiderstandes.

In EP 2 305 869 B1 (WO 2014/053505 A1) wird ein Verfahren beschrieben, bei dem Fasergemische in eine Form über eine oder mehrere Blasöffnungen eingeblasen werden. Anschließend wird das Material über Wärme verfestigt. Für steife Fasern wie C- oder GF-Fasern stellt dieses Verfahren auf Grund seiner mehr oder weniger nicht flächigen Anordnung der Fasern eine mögliche Ursache für Faserbruch bei der Verfestigung dar.

In EP 0 704 287 B1 ist ein Herstellungsverfahren für Fasergemische beschrieben, bei dem ein Halbzeug im Luftlegeverfahren hergestellt wird. In einem zweiten Schritt wird dieses Halbzeug in einem zweiten Werkzeug als heißes Bauteil verpresst und gekühlt.

In WO 2007/016879 A1 wird ein kombiniertes Blas-Form-Verfahren beschrieben, bei dem die Form zwei breite Seitenwände aufweist, wobei mindestens eine Seitenwand konturiert ist. In diese Form wird das Fasergemisch eingeblasen und sektorweise abgesaugt. Über eine Abzugseinrichtung wird der Faserformling entnommen und verfestigt. Nachteilig ist auch hier für C- und GF-Fasern die nicht allein flächige Anordnung der Fasern.

In DE 10 2005 004 454 B3 wird ein Verfahren zur Herstellung textiler Formstücke beschrieben. Dabei werden Fasern mit einer ungleichen Schichtdicken zu einem Rohling angesammelt und in ein Werkzeug, das die Form des Rohlings und luftdurchlässige Wände besitzt, gesaugt.

In EP 2 108 497 B1 wird ein Verfahren zur Herstellung von Bauteilen beschrieben, bei dem ein Fasergemisch aus Fasern und Bindefasern entgegen der Schwerkraft in ein luftdurchlässiges Flockwerkzeug mit der einseitigen Kontur des Bauteils geblasen/gesaugt wird.

Aus US 6,610,229 B1 ist ein Verfahren zur Herstellung eines 3-dimensionalen hochfesten Faserverbundbauteils mit isotroper Faserverteilung, mit einer lastgerechten Materialverteilung, aus steifen hochmoduligen Fasern und einer Kunststoffmatrix bekannt. Dabei werden die Fasern vor der Ablage in einem Flockwerkzeug mit einem Binder beschichtet oder alternativ mit dem Binder auf die eine Werkzeugoberfläche gesprüht.
In allen diesen Verfahren werden aufgelöste Fasern durch Saugen und/oder Blasen an die gewünschte Stelle eines luftdurchlässigen Werkzeuges gefördert. Die verwendeten Fasern umfassen für diese Anwendung zu 60 Gew.-% bis 85 Gew.-% höher schmelzende Einkomponentenfasern und zu 15 Gew.-% bis 40 Gew.-% Bindefasern.

Vorzugsweise werden als Bindemittel hauptsächlich BiCo-Fasern (Zweikomponenten-Fasern beispielsweise mit hoch schmelzendem Kern und einem niedrig schmelzenden Mantel) auf PET-Basis als Kern und CoPET als Mantel eingesetzt. Es sind auch andere Mantelmaterialien auf Basis von PE oder PP bekannt.
Durch die Erwärmung mit Luft wird das Material teilweise oder vollständig gebunden. Ist das Vliesbauteil nur partiell gebunden, erfolgt eine Nachverfestigung in einem beheizten Werkzeug.

Für Bauteile aus C-Fasern sind solche Verfahren zur Herstellung von Faserformlingen nicht bekannt und nicht im Einsatz. Da die Faserformlinge eine nur geringe Verfestigung besitzen, sind auch die Verfahren zur Einbindung der Fasern in eine Kunststoffmatrix nur bedingt anwendbar.

Aufgabe der vorliegenden Erfindung ist es daher, ein Verfahren zur Herstellung eines 3-dimensionalen Faserverbundbauteils, mit einer lastgerechten Materialverteilung mit steifen, hochmoduligen Fasern und einer Kunststoffmatrix in sehr kurzen Zykluszeiten bereitzustellen.

Erfindungsgemäß wird diese Aufgabe durch ein Verfahren zur Herstellung eines 3-dimensionalen Faserverbundbauteils gemäß Anspruch 1 gelöst.

Die Erfindung beruht auf der Erkenntnis, dass es durch gesteuertes Blasen und/oder Saugen von aufgelösten Fasern, mit oder ohne Bindefasern, in eine dreidimensionale luftdurchlässige Werkzeugform möglich ist, einen Faserformling bereitzustellen, wobei die Fasern dergestalt an einem dreidimensionalen Formteil angeordnet werden, dass sie in der Längs- und Querrichtung der Werkzeugform nahezu isotrop vorliegen und der Faserformling ein einheitliches oder bewusst lokal unterschiedliches Flächengewicht besitzt. Die Kontur der luftdurchlässigen Werkzeugform entspricht im Wesentlichen der Kontur der Ober- oder Unterseite des Bauteils.

Gegenstand der vorliegenden Erfindung in einer ersten Ausführungsform ist ein Verfahren zur Herstellung eines 3-dimensionalen Faserverbundbauteils mit isotroper Faserverteilung, mit einer lastgerechten Materialverteilung aus steifen, hochmoduligen Fasern und einer Kunststoffmatrix, in sehr kurzen Zykluszeiten, gemäß dem Anspruch 1.

Mit der Kombination dieser Schritte kann ein dreidimensionales Bauteil mit isotroper Faser-Verteilung und partiell unterschiedlichem Flächengewicht bei nahezu vollständiger Vermeidung von Fehlern in der Faserstruktur und dies bei sehr geringer Zykluszeit hergestellt werden. Dadurch wird die Produktivität gegenüber bekannten Verfahren deutlich verbessert.
Als Fasern werden hochfeste oder hochmodulige Fasern, insbesondere Glasfasern oder Kohlenstofffasern eingesetzt; es können jedoch auch Naturfasern, Kunststofffasern oder andere anorganische Fasern zusätzliche verwendet werden.

Dabei ist es möglich, sowohl sortenreine Fasern, als auch Fasermischungen aus Fasern mit ähnlichen oder deutlich unterschiedlichen Schmelzpunkten zu verwenden.

Gemäß der Erfindung werden die Fasern nach dem Öffnen mit zumindest einer Bindefaser gemischt. Als Öffnen der Fasern bezeichnet man das Auflösen der Fasern aus Faserbündeln, Ballen oder auch anderen textilen Strukturen (Faservorbereitung).

Gemäß der Erfindung kann der Massenanteil der Bindefasern bezogen auf die gesamte Fasermasse nach dem Mischen beispielsweise 5 Gew.-% oder weniger als 5 Gew.-% betragen. In diesem Fall dienen die Bindefasern lediglich der Vorverfestigung. Als Material für die Bindefasern können beispielsweise Co-Polyethylen, Co-Polyester, CoPolyamid oder thermoplastisches Polyurethan (PUR) genutzt werden. Bevorzugt werden Bindefasern genutzt, die sich mit der Kunststoffmatrix vertragen.
Das Einbringen der Fasern durch Blasen/Saugen in das Werkzeug kann so erfolgen, dass die Fasern über der gesamten Oberfläche des Werkzeugs ein einheitliches Flächengewicht aufweisen.
Vorteilhafterweise ist es aber auch möglich, die Fasern beim Saugen und/oder Blasen derart auf einer Oberfläche des dreidimensionalen, luftdurchlässigen Werkzeugteils so zu verteilen, dass die Fasern bezüglich der Oberfläche lokal unterschiedliche Flächengewichte aufweisen. So können partiell verstärkte 3-dimensionale Faserbauteile hergestellt werden.

Zum Vorverfestigen des Faserformlings können auch Bindefasern genutzt werden, die mit erhitzter Luft beaufschlagt werden. Andere Möglichkeiten der Vorverfestigung sind beispielsweise flüssige Binder oder Vernadeln mit Luft.

Ein derart verfestigter Faserformling kann transportiert und später auf einem Presswerkzeug abgelegt werden, ohne dass er auseinander fällt.

In einer weiteren Ausführung kann der vorverfestigte Faserformling, der weitgehend der Form des Bauteils entspricht, dann zum Überführen auf ein Presswerkzeug mittels einer Transportschale aufgebracht werden.

Des Weiteren ist denkbar, dass beim Überführen des Faserformlings auf das Presswerkzeug uniaxiale Faserbündel und/oder Gewebe an zumindest einer Oberfläche des Faserformlings mit eingebracht werden. Dies dient einer belastungsgerechten Verstärkung des Bauteils.

Für flüssige Kunststoffe, wie Harze (Epoxidharz, Phenolharz, Polyesterharz) oder Gusspolyamid (hier muss unter inerter Atmosphäre gearbeitet werden) können die bekannten Verfahren wie RTM oder TRTM Verfahren angewendet werden.

In einer weiteren Ausführung ist es möglich, mit einem flüssigen Kunststoff den Faserformling in Kontakt zu bringen, insbesondere zu besprühen. Eine besondere Bedeutung hat hier PUR Harz. Die Weiterverarbeitung kann dann im Autoklav-Verfahren oder Pressen erfolgen.

Die Herstellung von Bauteilen mit einer thermoplastischen Matrix erfolgt bevorzugt durch die Verwendung einer Fasermischung aus hochschmelzenden oder nichtschmelzenden Fasern, einer Bindefaser und der Matrixfaser. Als Matrixfasern sind höherfeste thermoplastische Materialien wie Polypropylen, unterschiedliche Polyamide, Polyester, Polyetheretherketon in Anwendung. Hierbei beträgt ein Massenanteil der Kunststofffasern (Matrix) an der gesamten Fasermasse nach dem Mischen ca. 30 Gew.-% bis 90 Gew.-%.

Zur weiteren Verarbeitung wird der Faserformling auf eine Temperatur oberhalb der Schmelztemperatur der Bindefasern erhitzt und vorverfestigt. In einem weiteren Schritt auf eine Temperatur oberhalb der Temperatur des Matrix-Kunststoffes erwärmt und in einer kalten Pressform verpresst.

### Ausführungsbeispiel:

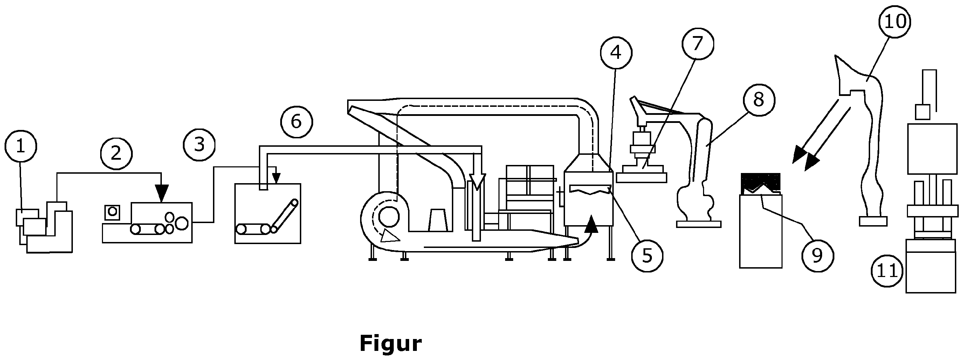

Nachfolgend wird eine bevorzugte Ausführungsform der Erfindung unter Bezug auf die Zeichnung beschrieben, wobei die Fig. schematisch das Grundprinzip des erfindungsgemäßen Verfahrens zum Herstellen eines 3-dimensionalen Faserbauteils unter Nutzung der HMP III - Faserflocktechnologie veranschaulicht.

Die C-Faser-Ballen wurden geöffnet, aufgelöst und mit handelsüblichen 3 Gew.-% PUR Bicomponentenfasern aus einem thermoplastischen PUR Materialkern und einen thermoplastischen Copolyurethan-Mantel gemischt (1, 2, 3). Die Schmelztemperatur des Copolyurethans betrug ca. 100 °C.

In der Flockbox 4 gab es einen geschlossenen Kreislauf in Pfeilrichtung von kalter (Raumtemperatur) Luft.

Das aufgelöste Fasergemisch wurde in den Luftstrom abgewogen eingebracht 6.

Im Filter 5, der im Wesentlichen die Kontur einer Seite des Bauteils besaß, sammelten sich die Fasern an. Durch Bereiche mit unterschiedlichen offenen Flächen wurde unterschiedlich viel Material angesaugt, was zu unterschiedlichen Flächengewichten im Bauteil führte. Durch heiße Luft mit einer Temperatur oberhalb der Schmelztemperatur des Mantelmaterials der BiCo-Fasern (in diesen Fall 100 °C) wurde der Faserformling so weit verfestigt, dass er transportiert werden konnte.

Mittels Entnahmeschale 7 und Roboter 8 wurde der Faserformling entnommen, wobei er mittels Vakuum auf der Schale gehalten wurde, und in eine Ablageschale 9 zum Besprühen abgelegt, mit einem zweiten Roboter 10 besprüht und in eine Pressform 11 transportiert; und anschließend verpresst und damit verfestigt wurde.

Das Besprühen konnte in einer weiteren Ausführungsform auch direkt im Presswerkzeug 11 erfolgen.

Als Presswerkzeug 11 konnte ein geeignetes herkömmliches Presswerkzeug verwendet werden.

Das derart hergestellte 3-dimensionale Bauteil wies in gewünschten Bereichen ein partiell erhöhtes Flächengewicht und damit erwünschte unterschiedliche Kraftaufnahme und Deformationsverhalten auf.

### Bezugszeichenliste:

- 1-3:: Faseraufbereitung
- 4:: Flockbox
- 5:: Filter
- 6:: Luftstrom
- 7:: Faserformling
- 8:: Roboter
- 9:: Ablageschale
- 10:: Sprüh-Roboter
- 11:: Pressform

## Patentansprüche

1. Verfahren zur Herstellung eines 3-dimensionalen hochfesten Faserverbundbauteils mit isotroper Faserverteilung, mit einer lastgerechten Materialverteilung, aus steifen, hochmoduligen Fasern und einer Kunststoffmatrix, umfassend die Schritte:
- Faservorbereitung (1,2,3) durch Öffnen der Fasern durch Auflösen dieser aus Faserbündeln, Ballen oder textilen Strukturen,
- **Mischen der** Fasern nach dem Öffnen mit zumindest einer Bindefaser, wobei der Massenanteil der Bindefasern an der gesamten Fasermasse nach dem Mischen 5 Gew.-% oder weniger als 5 Gew.-% beträgt,
- interaktiv gesteuertes Saugen und/oder Blasen (6) der geöffneten Fasern auf eine dreidimensionale, luftdurchlässige Werkzeughälfte (5) mit der Kontur dieser Seite des Bauteils,
- Vorverfestigen des erhaltenen Faserformlings in der Flockbox (4),
- Überführen des Faserformlings (7) auf ein Presswerkzeug (11) in der Form der Kontur der luftdurchlässigen Werkzeughälfte (5) des Bauteils,
- Inkontaktbringen (10) mit zumindest einem flüssigen Kunststoff und
- Verfestigen des Faserformlings durch Pressen (11) zu einem Bauteil.

2. Verfahren nach Anspruch 1, **dadurch gekennzeichnet, dass** als steife, hochmodulige Fasern Glasfasern oder Kohlenstofffasern eingesetzt werden.

3. Verfahren nach einem der Ansprüche 1 oder 2, **dadurch gekennzeichnet, dass** die Fasern beim Saugen und/oder Blasen (6) derart auf der Oberfläche des dreidimensionales, luftdurchlässigen Werkzeuges (5) angeordnet werden, dass die Belegung mit Fasern über der gesamten Oberfläche ein einheitliches Flächengewicht aufweist.

4. Verfahren nach einem der Ansprüche 1 bis 3, dadurch gekenhzeichnet, dass die Fasern beim Saugen und/oder Blasen (6) derart auf einer Oberfläche des 3-dimensionalen, luftdurchlässigen Werkzeug (5) angeordnet werden, dass die Belegung mit Fasern lokal unterschiedliche Flächengewichte aufweist.

5. Verfahren nach einem der Ansprüche 1 bis 4, **dadurch gekennzeichnet, dass** zum Vorverfestigen des Faserformlings (7) Bindefasern durch erhitzte Luft aktiviert werden.

6. Verfahren nach einem der Ansprüche 1 bis 5, **dadurch gekennzeichnet, dass** die Überführung des Faserformlings (7) auf ein Presswerkzeug (11) mittels einer Transportschale (4) erfolgt, bei der das Faserformteil über Vakuum gehalten wird.

7. Verfahren nach einem der Ansprüche 1 bis 6, **dadurch gekennzeichnet, dass** auf eine oder beide Oberflächen des Faserformlings (7) uniaxiale Faserbündel und/oder Gewebe aufgebracht werden.

8. Verfahren nach einem der Ansprüche 1 bis 7, **dadurch gekennzeichnet, dass** man als Bindefasern Einstofffasern aus thermoplastischen PUR, Copolyamid oder Copolyester einsetzt.

9. Verfahren nach einem der Ansprüche 1 bis 8, **dadurch gekennzeichnet, dass** man als Bindefasern Bicomponentenfasern mit Mantelmaterialien aus thermoplastischem PUR, Copolyamid oder Copolyester einsetzt.

10. Verfahren nach einem der Ansprüche 1 bis 9, **dadurch gekennzeichnet, dass** man als Matrixwerkstoffe im Anwendungszustand flüssige Harze aus einem der Materialien wie Epoxidharz, Polyurethanharz, Polyesterharz oder Gusspolyamid einsetzt.

11. Verfahren nach einem der Ansprüche 1 bis 10, **dadurch gekennzeichnet, dass** man das Harz auf den Faserformling ein- oder beidseitig aufsprüht.

12. Verfahren nach einem der Ansprüche 1 bis 11, **dadurch gekennzeichnet, dass** man das Harz in dem geschlossenen Werkzeug durch werkzeugseitige Düsen in den verpressten Faserformling injiziert.

13. 3-dimensionales, hochfestes Faserverbundbauteil mit isotroper Faserverteilung, hergestellt nach einem der Ansprüche 1 bis 12, umfassend 25 bis 70 Gew.-% hochfestes, hochmoduliges Fasermaterial, bis zu 5 Gew.-% Bindefasermaterial, und 25 bis 70 Gew.-% duro- oder thermoplastische Matrix.

## Claims

1. A method for producing a three-dimensional high-strength fiber composite component with an isotropic fiber distribution with a load-dependent material distribution made of stiff high-modulus fibers and a plastic matrix, comprising the steps of:
- fiber preparation (1, 2, 3) by opening the fibers by releasing the same from fiber bundles, bales or textile structures;
- mixing of the fibers after the opening with at least one binding fiber, wherein the mass proportion of the binding fibers in the entire fiber mass after the mixing is 5% by weight or less than 5% by weight;
- interactively controlled sucking and/or blowing (6) of the opened fibers onto a three-dimensional air-permeable half mold (5) with the contour of this side of the component;
- preliminarily solidifying the obtained fiber preform in a flockbox (4);
- transferring the fiber preform (7) to a pressing mold (11) in the form of the contour of the air-permeable half mold (5) of the component;
- contacting (10) with at least one liquid plastic material; and
- solidifying the fiber preform by pressing (11) into a component.

2. The method according to claim 1, **characterized in that** glass fibers or carbon fibers are employed as said stiff high-modulus fibers.

3. The method according to either of claims 1 or 2, **characterized in that** the fibers are arranged on the surface of said three-dimensional air-permeable mold (5) during the sucking and/or blowing (6) in such a way that the coverage of the fibers has a uniform weight per unit area over the entire surface.

4. The method according to any of claims 1 to 3, **characterized in that** the fibers are arranged on the surface of said three-dimensional air-permeable mold (5) during the sucking and/or blowing (6) in such a way that the coverage of the fibers has locally different weights per unit area.

5. The method according to any of claims 1 to 4, **characterized in that** binding fibers are activated by heated air for preliminarily solidifying the fiber preform (7).

6. The method according to any of claims 1 to 5, **characterized in that** the transfer of said fiber preform (7) to a pressing mold (11) is effected by means of a transport tray (4), in which the fiber preform is retained by a vacuum.

7. The method according to any of claims 1 to 6, **characterized in that** the uniaxial fiber bundles and/or fabrics are applied to one or both surfaces of the fiber preform (7).

8. The method according to any of claims 1 to 7, **characterized in that** one-component fibers of thermoplastic PUR, copolyamide or copolyester are employed as said binding fibers.

9. The method according to any of claims 1 to 8, **characterized in that** bicomponent fibers with shell materials of thermoplastic PUR, copolyamide or copolyester are employed as said binding fibers.

10. The method according to any of claims 1 to 9, **characterized in that** resins that are liquid in the application state and made of one of the materials epoxy resin, polyurethane resin, polyester resin or casting polyamide are employed as matrix materials.

11. The method according to any of claims 1 to 10, **characterized in that** said resin is sprayed on one or both sides of said fiber preform.

12. The method according to any of claims 1 to 11, **characterized in that** said resin is injected through nozzles on the mold side into the pressed fiber preform in the closed mold.

13. A three-dimensional high-strength fiber composite component with an isotropic fiber distribution, prepared according to any of claims 1 to 12, comprising from 25 to 70% by weight of high-strength, high-modulus fiber material, up to 5% by weight of binding fiber material, and from 25 to 70% by weight of thermoset or thermoplastic matrix.

## Revendications

1. Procédé pour produire un composant composite en fibres tridimensionnel de grande résistance mécanique ayant une distribution de fibres isotrope, avec une distribution de masse en fonction de la charge, consistant en fibres rigides ayant un haut module d'élasticité et une matrice en matière plastique, comprenant les étapes consistant à :
- préparer les fibres (1, 2, 3) par ouvrage des fibres en détachant les fibres de faisceaux de fibres, de balles ou de structures textiles,
- mélanger les fibres après l'ouvrage avec au moins une fibre liante, dans lequel la proportion massique des fibre liantes dans la masse entière de fibres après le mélange est 5 % en poids ou moins de 5 % en poids,
- aspirer et/ou souffler par commande interactive (6) les fibres ouvertes sur une moitié d'outil (5) tridimensionnelle et perméable à l'air ayant le contour de ce côté du composant,
- présolidifier les fibres moulées obtenues dans une boîte à flocage (4),
- transférer les fibres moulées (7) sur un outil de pressage (11) dans la forme du contour de la moitié d'outil perméable à l'air (5) du composant,
- mettre en contact (10) avec au moins une matière plastique liquide, et
- solidifier les fibres moulées par pressage (11) pour obtenir un composant.

2. Procédé selon la revendication 1, **caractérisé en ce que** des fibres de verre ou des fibres de carbone sont utilisées comme fibres rigides ayant un haut module d'élasticité.

3. Procédé selon l'une des revendications 1 ou 2, **caractérisé en ce que** les fibres sont arrangées sur la surface dudit moule (5) tridimensionnel et perméable à l'air pendant l'aspiration et/ou le soufflage (6) de telle manière que la couverture des fibres présente un poids par unité de superficie uniforme sur toute la surface.

4. Procédé selon l'une quelconque des revendications 1 à 3, **caractérisé en ce que** les fibres sont arrangées sur la surface dudit moule (5) tridimensionnel et perméable à l'air pendant l'aspiration et/ou le soufflage (6) de telle manière que la couverture des fibres présente des poids par unité de superficie localement différents.

5. Procédé selon l'une quelconque des revendications 1 à 4, **caractérisé en ce que** des fibres liantes sont activées par de l'air chauffé pour présolidifier les fibres moulées (7).

6. Procédé selon l'une quelconque des revendications 1 à 5, **caractérisé en ce que** le transfert desdites fibres moulées (7) dans un moule de pressage (11) est effectué au moyen d'une boîte de transport (4) dans laquelle les fibres moulées sont retenues par un vide.

7. Procédé selon l'une quelconque des revendications 1 à 6, **caractérisé en ce que** les faisceaux de fibres uniaxiaux et/ou tissus sont appliqués sur une ou les deux surfaces des fibres moulées (7).

8. Procédé selon l'une quelconque des revendications 1 à 7, **caractérisé en ce que** des fibres monocomposants en PUR thermoplastique, copolyamide ou copolyester sont utilisées comme lesdites fibres liantes.

9. Procédé selon l'une quelconque des revendications 1 à 8, **caractérisé en ce que** des fibres bicomposants avec des matériaux de gaine en PUR thermoplastique, copolyamide ou copolyester sont utilisées comme lesdites fibres liantes.

10. Procédé selon l'une quelconque des revendications 1 à 9, **caractérisé en ce que** des résines qui sont liquides dans l'état d'application et consistent en un des matériaux résine d'époxyde, résine polyuréthane, résine polyester ou polyamide de coulée sont utilisés comme matériau de matrice.

11. Procédé selon l'une quelconque des revendications 1 à 10, **caractérisé en ce que** ladite résine est appliquée par pulvérisation sur une ou les deux surfaces desdits côtés des dites fibres moulées.

12. Procédé selon l'une quelconque des revendications 1 à 11, **caractérisé en ce que** ladite résine est injectée à travers des buses sur le côté du moule dans les fibres moulées dans le moule fermé.

13. Composant composite en fibres tridimensionnel de grande résistance mécanique ayant une distribution de fibres isotrope, préparé selon l'une quelconque des revendications 1 à 12, comprenant de 25 à 70 % en poids d'un matériau de fibres à haute résistance mécanique ayant un haut module d'élasticité, jusqu'à 5 % en poids de matériau de fibres liant, et 25 à 70% en poids d'une matrice thermodurcie ou thermoplastique.
